# EUROPEAN PATENT SPECIFICATION

(11) **EP 1 010 282 B1**
(45) Date of publication and mention of the grant of the patent: **08.02.2006**
(21) Application number: 97933103.0
(22) Date of filing: 04.07.1997
(51) Int. Cl.: H04J 15/00

(54) **METHOD FOR TRANSMISSION IN AUTONOMOUS PACKET RADIO NETWORKS**
VERFAHREN ZUR ÜBERTRAGUNG IN AUTONOMEN PAKETNETZWERKEN
PROCEDE DE TRANSMISSION PAR PAQUETS AUTONOMES DANS DES RESEAUX RADIO

(30) Priority: 05.07.1996 SE 9602665
(43) Date of publication of application: 21.06.2000
(73) Proprietor: SAAB AB, 581 88 Linköping (SE)
(72) Inventor: LIND, Henrik, S-168 56 Bromma (SE); JOHANSSON, Jan, S-162 47 Vällingby (SE); LUNDBERG, Björn, S-182 62 Djursholm (SE)
(74) Representative: Falk, Bengt
(86) International application number: PCT/SE1997/001215
(87) International publication number: WO 1998/001972

(56) References cited:
- GB-A- 2 288 518
- US-A- 5 229 993
- US-A- 5 493 569
- WILLIAM STALLINGS, "Data and Computer Communications", Third Edition, 1991, MACMILLAN PUBLISHING COMPANY, ISBN 0-02-946478-1, (NEW YORK), pages 446-457.
- IEEE INTERNATIONAL CONFERENCE ON COMMUNICATIONS, 1983, DIMITRIADIS, POLYZOS, ALEXANDRIDIS, OUCHERIAH, "On a Hybrid TDMA/CSMA L.A.N. Accessing Scheme Serving Users with Variable Traffic Characteristics and Minimizing an Operating Delay Metric".

## Description

The present invention relates to a method of transmission of information in packet form in a channel between a number of autonomous transmitter/receiver stations using a first access method which listens for whether the channel is free and, with a free channel and after a possible further delay, initiates transmission from a transmitter/receiver station requesting transmission, at the time of the transmission request the transmitter/receiver station(s) for which the transmission is intended being addressed by the transmitter/receiver station requesting transmission and the addressed stations which respond to the transmitter/receiver station requesting transmission transmitting acknowledgements relating to received transmissions.

The method is suitable, for example, for communication between autonomous radio stations which communicate within narrow frequency bands with long propagation delays and with not inconsiderable interference levels, as well as a requirement for acknowledgement within a guaranteed period of time. The method can be used inter alia for communication within the defence sector where it is often desirable to maintain silence for long periods so as not to advertise one's presence at the same time as autonomous stations included in the system have to be able to exchange information rapidly and reliably without a central control.

An example of the first access method is CSMA (Carrier Sense Multiple Access). Confirmation of a free channel using the CSMA method is known per se through, for example, US 5 229 993.

Known methods for autonomous stations have, however, proved to have limitations, in particular in the case of a requirement for immediate acknowledgement of individual transmissions. The number of collisions between different transmissions and associated retransmissions then threatens to increase to such a level that unacceptable transmission times are obtained which results in total blocking of the channel.

Another method of communicating between different transmitter stations is known through US Patent Specification 5 493 569. In this case, use is made of a time division access method, TDMA. In this case, it is not autonomous transmitter/receiver stations which are involved but the stations are connected in a star-type network to a common controller. Communication problems in the case of controlled star-type networks are entirely different to those in the case of networks with autonomous stations, and therefore the specification only confirms that the TDMA access method is known per se. Document GB 2 288 518 discloses a home electrical management system wherein devices are connected in parallel. The exchange protocal uses both SCMA and TDM.

The object of the present invention is to produce a transmission method which reduces the number of collisions, has improved control of the transmissions and also gives an acknowledgement within a guaranteed period of time.

The object of the invention is achieved by a method characterized in that the acknowledgements from each addressed transmitter/receiver station are transmitted using a second, time division access method. By changing over to a time division access method during an acknowledgement period, effective utilization of the channel is obtained during the acknowledgement period. There is no risk of the acknowledgements colliding with one another. At the same time, the acknowledgements utilize a high proportion of the total capacity of the channel. Using the two different access methods in the manner indicated in a system with a number of autonomous transmitter/receiver stations allows long propagation delays at the same time as the number of collisions is reduced without the system becoming particularly complex as a result. ,

Advantageously, the first access method can listen for any carrier wave on the channel using CSMA, and the second access method can work in single-cycle TDMA (Time Division Multiple Access).

An advantageous method according to the invention is characterized in that, at the end of every transmission using the first access method, a final packet is added, with an acknowledgement request containing a list of receiver/transmitter stations and their position during a subsequent acknowledgement cycle performed using the second, time division access method. By means of the method, receiving stations obtain easily accessible and adequate information so as to be capable of changing over to a time division access method during transmission of requested acknowledgements. When a receiving station has identified the packet with the acknowledgement request, it can conclude directly that the end of the transmission has been reached.

According to another advantageous method, the second access method uses the final packet with the acknowledgement request transmitted using the first access method as a synchronization point for the transmitter/receiver stations which are to transmit acknowledgements. In this way, simple synchronization of the stations, which is sufficiently accurate for the purpose, is achieved.

According to a further advantageous method according to the invention, every transmission cycle is introduced with an idle period tᵢₗ. By making tᵢₗ > t_{T1} + 2* t_{T2} - t_{T3}, preferably > t_{T1} + 2* t_{T2}, where t_{T1} designates the idle period from the end of a transmission using the first access method to the transmission of a first acknowledgement using the second access method, t_{T2} designates the length of a time interval during the second access method and t_{T3} designates the length of an acknowledgement, an ongoing acknowledgement cycle is prevented from being interrupted in the case of acknowledgement responses which have failed to appear as long as the station receives acknowledgements during at least every other time interval. The introduction of this idle period considerably increases the possibilities of completing an entire acknowledgement cycle even in difficult communication situations.

According to another advantageous method according to the invention, the second access method is introduced with an idle period t_{T1}. By introducing the initial idle period, even the station which is the first one to transmit acknowledgements is given time to generate these.

The second, time division access method does not have to be used exclusively for acknowledgement transmission, but can advantageously also be used for transmission of other information, such as urgent alarms or other access information.

According to an expedient method, in which the transmitter/receiver stations include at a higher level than a media access layer and a data link layer a respective transmitter/receiver unit, initiation of acknowledgement generation and identification of end of acknowledgement are carried out by a logic circuit included in the media access layer and acknowledgement packets are generated and transmitted between data link layers. Advantageously, all unacknowledged packets which should have been acknowledged positively or negatively during a transmission cycle are then considered negatively acknowledged. By means of the method, the time between retransmissions can be reduced and cases of acknowledgements failing to appear as a result of interference levels on the channel being too high are avoided completely. A guaranteed time for final acknowledgement is also obtained.

The invention will be described in greater detail below with reference to the attached drawings, in which:
- Figure 1: shows an example of a number of transmitter/receiver stations which can form part of a communication system which uses the transmission method according to the invention;
- Figure 2: illustrates in a time diagram the transmission method according to the invention;
- Figure 3: illustrates the CSMA method in a time diagram;
- Figure 4: illustrates in greater detail in a time diagram a proposed time division access method which can form part of the transmission method;
- Figure 5: shows an example of how two communicating transmitter/receiver stations can be constructed;
- Figure 6: shows transaction handling of link acknowledgements, and
- Figure 7: illustrates the acknowledgement operation for transmitted packets in a diagrammatic manner for a state machine.

In the communication system shown in Fig. 1, eight transmitter/receiver stations S/M1-S/M8 are shown. Communication between the various stations cannot always be guaranteed. In the figure, a possible range for the station S/M1 has been exemplified in particular by means of a circle of dashes 1. In the exemplified communication system, information can therefore not be exchanged between the stations S/M1 and S/M8. The total number of stations included in the communication system may be either smaller or considerably greater than the eight which are shown. In the system, one or more stations can be specifically addressed and asked for acknowledgements.

An example of a transmission TC using the CSMA method is described first below with reference to Figure 3. In this case, the use of the CSMA method is proposed as the first access method. A number of other methods are possible, however, but are not dealt with in greater detail here. A transmitter/receiver station, e.g. S/M1, which wishes to transmit, listens for whether the channel for transmission is free. The criterion for a free channel is that there is no carrier wave/signal on the channel. In the event that the channel was busy and is subsequently found to be free, a random delay is introduced within a time interval tᵢ₂ between the times T₂ and T₄ before the station is allowed to transmit. A condition for transmission at time T₄ is that the channel has been free from time T₁. Transmission is then permitted for a time interval tᵢ₃ until time T₅.

In the event that a transmission according to the above paragraph requires acknowledgements, a final packet PF with an acknowledgement request is added to the transmission TC1, as shown in Figure 2. The acknowledgement request contains a list of addressed transmitter/receiver stations and their position during a subsequent acknowledgement cycle using the time division access method.

A transmitter/receiver station, for example S/M2, which listens to the channel and possibly waits until it can transmit on the channel, and as addressed receiver receives the packet PF, generates internally an acknowledgement KV2. The transmitter/receiver station S/M2 in this connection uses the final packet PF as a synchronization point SP and transmits its acknowledgement on the channel in its assigned position during the acknowledgement cycle KV1-KVn. Every acknowledgement is assigned a length t_{T3} and is accommodated within a time interval t_{T2}. As can best be seen in Figure 4, the acknowledgement cycle is introduced with an idle period t_{T1}. This idle period ensures that the acknowledgement in the transmitter/receiver station which is to transmit first can be generated in time for transmission.

After the acknowledgement cycle has been completed and all addressed stations have been given the opportunity to transmit acknowledgements, the stations revert to the CSMA method. A new transmission TC2 using CSMA is subsequently allowed to follow, transmitted from any one of the stations included in the system. In the event that retransmissions have to be made, this is effected by every retransmission being assigned a new transmission cycle of its own. Possible retransmission sequences are discussed in greater detail below.

In order to prevent any of the stations reverting to the CSMA method during the acknowledgement cycle, every changeover to the CSMA method is introduced with an idle period tᵢ₁. By ensuring that the idle period is so long that an acknowledgement which has failed to appear between two received acknowledgements is not sufficient for changing over to the CSMA method, the acknowledgement cycle is guaranteed as long as two adjacent acknowledgements do not fail to appear. The idle period can in this connection be dimensioned to comply with the relationship tᵢ₁ > t_{T1} + 2*t_{T2} - t_{T3}.

Every transmitter/receiver station S/M1-S/M2 can, as shown in Figure 5, include a data link layer DL1, DL2 and a media access layer MA1, MA2 at a higher level than a respective radio unit RU1, RU2.

Figure 6 shows how link acknowledgements can be handled in transmitter/receiver stations which include closely connected data link and media access layers. Outgoing packets from the station S/M1 are recorded in a list of transmitted packets in the data link layer DL1. Incoming packets at the station S/M2 are recorded in a list of received packets in the data link layer DL2. The media access layer MA2, which recorded the request for acknowledgements, orders generation of acknowledgements in the data link layer DL2. Acknowledgement packets are transmitted from the data link layer DL2 to DL1 during the assigned time interval. The media access layer MA1 informs the data link layer DL1 of the end of acknowledgement. Any request for retransmission is handled at higher level in the data link layer or in higher-level layers. Acknowledgements are conveyed upwards in the data link layer and higher-level layers.

Figure 7 shows the acknowledgement operation for transmitted packets in the form of a diagram for a state machine. In the starting position, we are dealing with untransmitted packets symbolized by the state S1. Outgoing packets are recorded (A) and can be divided into three types:
A1, packets which will be acknowledged during this transmission,
A2, packets which will not be acknowledged during this transmission,
A3, packets which will not be acknowledged.

For the A3 type, this means that the procedure is completed and with that the state S6 is reached directly. The A1 type waits for acknowledgement during this transmission symbolized by the state S2. Acknowledgement received is acknowledged positively or negatively, see states S4 and S5. For a positive acknowledgement, the procedure is completed and the state S6 is reached. For negative acknowledgement, retransmission is considered. The number of retransmissions is limited. Packets with later acknowledgement (A2 type) wait in state S3 for conversion to A1 type in order then to follow the same operation as previously described for the A1 type. Any retransmission request from the state S4 and also completed acknowledgements from the state S6 are transmitted upwards in the layer structure of the station.

## Claims

1. Method of transmission of information in packet form in a channel between a number of transmitter/receiver stations using a first access method which listens for whether the channel is free and, with a free channel and after a possible further delay, initiates transmission from a transmitter/receiver station requesting transmission, at the time of the transmission request the transmitter/receiver station(s) for which the transmission is intended being addressed by the transmitter/receiver station requesting transmission and **characterised by** the addressed stations which respond to the transmitter/receiver station requesting transmission transmitting acknowledgements relating to the received transmissions, and **in that** the transmitter/receiver stations are autonomous radio transmitter/receiver stations carrying out transmission of information in packet form between the transmitter/receiver stations in radio networks and in that the acknowledgements from each addressed transmitter/receiver station are transmitted by the radio networks using a second, time division access method, TDMA.

2. Method according to Patent Claim 1, **characterized in that** the second access method works in single-cycle TDMA.

3. Method according to one of the preceding patent claims, **characterized in that** the first access method listens for any carrier wave on the channel using CSMA.

4. Method according to any one of the preceding patent claims, **characterized in that**, at the end of every transmission using the first access method, a final packet is added, with an acknowledgement request containing a list of receiver/transmitter stations and their position during a subsequent acknowledgement cycle performed using the second, time division access method.

5. Method according to Patent Claim 4, **characterized in that** the second access method uses the final packet with the acknowledgement request transmitted using the first access method as a synchronization point for the transmitter/receiver stations which are to transmit acknowledgements.

6. Method according to any one of the preceding patent claims, **characterized in that** the changeover from the second access method to the first access method is introduced with an idle period tᵢ₁ > t_{T1} + 2* t_{T2} - t_{T3}, preferably > t_{T1} + 2* t_{T2}, where t_{T1} designates the idle period from the end of a transmission using the first access method to the transmission of a first acknowledgement using the second access method, t_{T2} designates the length of a time interval during the second access method and t_{T3} designates the length of an acknowledgement.

7. Method according to patent claim 6, **characterized in that** the second access method is introduced with an idle period t_{T1}.

8. Method according to any one of the preceding patent claims, **characterized in that** the second, time division access method is also used for transmission of information other than acknowledgements, such as for example urgent alarm signals or access information.

9. Method according to any one of the preceding patent claims, in which the transmitter/receiver stations include a media access layer and a data link layer at a higher level than a respective transmitter/receiver unit, **characterized in that** initiation of acknowledgement generation and identification of end of acknowledgement are carried out by a logic circuit included in the media access layer and **in that** acknowledgement packets are generated and transmitted between data link layers.

10. Method according to any one of the preceding patent claims, **characterized in that** all unacknowledged packets which should have been acknowledged positively or negatively during a transmission cycle are considered negatively acknowledged.

## Patentansprüche

1. Verfahren zur Übertragung von Information in Paketform in einen Kanal zwischen einer Anzahl von Sender/Empfänger-Stationen mittels einer ersten Zugangsmethode, die horcht, ob der Kanal frei ist, und bei freiem Kanal und nach einer eventuellen weiteren Verzögerung die Übertragung von einer Übertragung anfordernden Sender/Empfänger-Station auslöst, wobei zum Zeitpunkt der Übertragungsanforderung die Sender/Empfänger-Station(en), für die die Übertragung bestimmt ist, von der die Übertragung anfordernden Sender/Empfänger-Station adressiert wird (werden), **dadurch gekennzeichnet, dass** die adressierten Stationen, die auf die die Übertragung anfordernde Sender/Empfänger-Station antworten, Bestätigungen bezüglich der empfangenen Übertragungen aussenden, und dass die Sender/Empfänger-Stationen autonome Funksender/Empfänger-Stationen sind, die die Übertragung von Information in Paketform zwischen den Sender/Empfänger-Stationen in Funknetzen ausführen, und dass die Bestätigungen von jeder adressierten Sender/Empfänger-Station durch die Funknetzwerke mittels einer zweiten, Zeit-Multiplex-Zugangsmethode TDMA übertragen werden.

2. Verfahren nach Anspruch 1, **dadurch gekennzeichnet, dass** die zweite Zugangsmethode im Ein-Zyklus TDMA arbeitet.

3. Verfahren nach einem der vorangehenden Ansprüche, **dadurch gekennzeichnet, dass** die erste Zugangsmethode nach jeder Trägerwelle auf dem Kanal, die CSMA benutzt, horcht.

4. Verfahren nach einem der vorangehenden Ansprüche, **dadurch gekennzeichnet, dass** am Ende jeder Übertragung mittels der ersten Zugangsmethode ein Endpaket hinzugefügt wird, mit einer Bestätigungsanforderung, die eine Liste von Empfänger/Sender-Stationen und deren Positionen enthält, während eines folgenden Bestätigungszyklus, der mittels der zweiten Zeit-Multiplex-Zugangsmethode durchgeführt wird.

5. Verfahren nach Anspruch 4, **dadurch gekennzeichnet , dass** die zweite Zugangsmethode das Endpaket mit der Bestätigungsanforderung, das mit der ersten Zugangsmethode übertragen wird, als ein Synchronisationspunkt benutzt für diejenigen Sender/Empfänger-Stationen, die Bestätigungen aussenden sollen.

6. Verfahren nach einem der vorangehenden Ansprüche, **dadurch gekennzeichnet, dass** der Wechsel von der zweiten Zugangsmethode zu der ersten Zugangsmethode mit einer Leerlaufperiode tᵢ₁ > t_{T1} + 2* t_{T2} - t_{T3}, vorzugsweise > t_{T1} + 2* t_{T2} eingeführt wird, wobei t_{T1} die Leerperiode von dem Ende einer Übertragung mittels der ersten Zugangsmethode bis zu der Übertragung einer ersten Bestätigung mittels der zweiten Zugangsmethode, t_{T2} die Länge eines Zeitintervalls während der zweiten Zugangsmethode, und t_{T3} die Länge einer Bestätigung bezeichnet.

7. Verfahren gemäß Anspruch 6, **dadurch gekennzeichnet, dass** die zweite Zugangsmethode mit einer Leerperiode t_{T1} eingeführt wird.

8. Verfahren nach einem der vorangehenden Ansprüche, **dadurch gekennzeichnet, dass** die zweite Zeitmultiplex-Zugangsmethode auch für die Übertragung von anderer Information als Bestätigungen benutzt wird, wie z.B. für dringende Alarmsignale oder Zugangsinformation.

9. Verfahren nach einem der vorangehenden Ansprüche, bei dem die Sender/Empfänger-Stationen eine Medienzugangsebene und eine Datenverbindungsebene auf höherem Niveau als eine jeweilige Sender/Empfänger-Einheit umfassen, **dadurch gekennzeichnet, dass** die Auslösung der Generierung von Bestätigung und die Identifikation des Endes der Bestätigung ausgeführt werden durch eine Logikschaltung, die in der Medienzugangsebene enthalten ist, und dass Bestätigungspakete erzeugt und zwischen den Datenverbindungsebenen übertragen werden.

10. Verfahren nach einem der vorangehenden Ansprüche, **dadurch gekennzeichnet, dass** alle unbestätigten Pakete, die während eines Übertragungszyklus positiv oder negativ hätten bestätigt werden sollen, als negativ bestätigt betrachtet werden.

## Revendications

1. Méthode de transmission d'informations sous forme de paquet de données sur une voie de transmission entre un certain nombre de stations émettrices / réceptrices utilisant une première méthode d'accès qui est en mode Réception afin de déterminer si la voie de transmission est libre et, dans le cas d'une voie de transmission libre et après un éventuel délai supplémentaire, qui lance la transmission à partir d'une station émettrice / réceptrice demandant la transmission, étant entendu que lorsque la transmission est demandée la ou les station(s) émettrice(s) / réceptrice(s) vers laquelle ou lesquelles la transmission est dirigée est ou sont adressée(s) par la station émettrice / réceptrice demandant la transmission et **caractérisée en ce que** les stations adressées qui répondent à la station émettrice / réceptrice demandant la transmission en transmettant des accusés de réception concernant les transmissions reçues, et **en ce que** les stations émettrices / réceptrices sont des stations émettrices / réceptrices de radiodiffusion autonomes effectuant des transmissions d'informations sous forme de paquet de données entre les stations émettrices / réceptrices sur des réseaux de radiocommunication et **caractérisée en ce que** les accusés de réception provenant de chaque station émettrice / réceptrice adressée sont transmis par les réseaux de radiocommunication utilisant une seconde méthode d'accès multiple par répartition dans le temps, AMRT.

2. Méthode selon la revendication 1, **caractérisée en ce que** la seconde méthode d'accès fonctionne en mode AMRT à cycle simple.

3. Méthode selon l'une des revendications précédentes, **caractérisée en ce que** la première méthode d'accès est en mode Réception afin de détecter toute onde porteuse sur la voie de transmission en utilisant l'accès multiple avec écoute de porteuse (CSMA).

4. Méthode selon l'une quelconque des revendications précédentes, **caractérisée en ce que**, à la fin de chaque transmission utilisant la première méthode d'accès, un paquet de données final est ajouté, avec une demande d'accusé de réception contenant une liste des stations émettrices / réceptrices et leur position au cours d'un cycle d'accusé de réception ultérieur effectué en utilisant la seconde méthode d'accès multiple par répartition dans le temps, AMRT.

5. Méthode selon la revendication 4, **caractérisée en ce que** la seconde méthode d'accès utilise le paquet de données final avec la demande d'accusé de réception transmise au moyen de la première méthode d'accès comme point de synchronisation pour les stations émettrices / réceptrices qui doivent transmettre des accusés de réception.

6. Méthode selon l'une quelconque des précédentes revendications, **caractérisé en ce que** le passage de la seconde méthode d'accès à la première méthode d'accès est introduit avec un temps de repos tᵢ₁ > t_{T1} + 2 * t_{T2} - t_{T3}, de préférence > t_{T1} + 2 * t_{T2}, où t_{T1} désigne le temps de repos entre la fin d'une transmission utilisant la première méthode d'accès et la transmission d'un premier accusé de réception utilisant la seconde méthode d'accès, t_{T2} désigne la durée d'un intervalle de temps au cours de la seconde méthode d'accès et t_{T3} désigne la durée d'un accusé de réception.

7. Méthode selon la revendication 6, **caractérisée en ce que** la seconde méthode d'accès est introduite avec un temps de repos t_{T1}.

8. Méthode selon l'une quelconque des précédentes revendications, **caractérisée en ce que** la seconde méthode d'accès multiple par répartition dans le temps est également utilisée pour la transmission d'informations autres que des accusés de réception, tel que par exemple des signaux d'alarme urgents ou des informations d'accès.

9. Méthode selon l'une quelconque des précédentes revendications, dans laquelle les stations émettrices / réceptrices comprennent une couche d'accès au support et une couche de liaison de données à un plus haut niveau que celles d'une unité émettrice / réceptrice respective, **caractérisée en ce que** le début de la génération d'accusé de réception et l'identification de la fin de l'accusé de réception sont effectués par un circuit logique compris dans la couche d'accès au support et **caractérisée en ce que** les paquets de données d'accusé de réception sont générés et transmis entre les couches de liaison de données.

10. Méthode selon l'une quelconque des précédentes revendications, **caractérisée en ce que** tous les paquets de données n'ayant pas fait l'objet d'un accusé de réception qui auraient dû faire l'objet d'un accusé de réception positif ou négatif au cours d'un cycle de transmission sont considérés comme ayant fait l'objet d'un accusé de réception négatif.
